# EUROPEAN PATENT APPLICATION

(11) **EP 2 876 705 A2**
(43) Date of publication of application: **27.05.2015**
(21) Application number: 14190864.0
(22) Date of filing: 29.10.2014
(51) Int. Cl.: H01M 2/20, H01M 2/02, H01M 2/10

(54) **Busbar for assembled battery**

(30) Priority: 20.11.2013 JP 2013240307
(71) Applicant: Kabushiki Kaisha Toshiba, Tokyo 105-8001 (JP)
(72) Inventor: Sakate, Yoichi, Tokyo, 105-8001 (JP); Fukuda, Shigeo, Tokyo, 105-8001 (JP); Miyamoto, Hidenori, Tokyo, 105-8001 (JP); Enomoto, Takashi, Tokyo, 105-8001 (JP); Hoshino, Mitsuhiro, Tokyo, 105-8001 (JP)
(74) Representative: Hoffmann Eitle

(57) **Abstract**

According to one embodiment, a connecting busbar includes a pair of first connecting portions provided on first end portions, a pair of second connecting portions provided on second end portions, and a coupling portion that couples the first end portions and the second end portions. Each of the first connecting portions and the second connecting portions is provided with projecting portions that project toward each of positive electrode terminals and negative electrode terminals, and a connecting opening portion provided on a tip end of the projecting portion. The projecting portion is joined to the positive electrode terminal and the negative electrode terminal by performing welding such as laser welding on a thinned portion in a state that a surface of a curved portion contacts with the positive electrode terminal and the negative electrode terminal while the connecting opening approaches the positive electrode terminal and the negative electrode terminal.

## Description

### FIELD

Embodiments described herein relate generally to a busbar for an assembled battery, and an assembled battery.

### BACKGROUND

In the related art, a secondary battery device is known, in which a connecting busbar that connects electrode terminals of a plurality of secondary batteries with each other is welded to the electrode terminals by laser welding, electron beam welding or resistance welding.

An example of related art includes JP-A-2013-196932.

### BRIEF DESCRIPTION OF THE DRAWINGS

FIG. 1 is a perspective view schematically illustrating a configuration of an assembled battery of an exemplary embodiment with omitting portions other than a connecting busbar portion; and an enlarged perspective view schematically illustrating the connecting busbar portion.
FIGS. 2A to 2C are enlarged cross-sectional views schematically illustrating configurations of the connecting busbar, positive electrode terminals and negative electrode terminals of the assembled battery, according to first to third examples of the exemplary embodiment, respectively.
FIG. 3 is an enlarged perspective view schematically illustrating a configuration of a connecting busbar portion of an assembled battery according to a first modification example of the exemplary embodiment.
FIG. 4 is an enlarged perspective view schematically illustrating a configuration of a connecting busbar portion of an assembled battery according to a second modification example of the exemplary embodiment.
FIG. 5 is an enlarged perspective view schematically illustrating a configuration of a connecting busbar portion of an assembled battery according to a third modification example of the exemplary embodiment.
FIG. 6 is an enlarged perspective view schematically illustrating a configuration of a connecting busbar portion of an assembled battery according to a fourth modification example of the exemplary embodiment.
FIGS. 7A to 7D are cross-sectional views each of which schematically illustrates an example of combining a connecting busbar with respect to a positive electrode terminal and a negative electrode terminal of an assembled battery according to the fourth modification example of the exemplary embodiment.

### DETAILED DESCRIPTION

However, when a plate-like connecting busbar is connected to electrode terminals of each of the plurality of secondary batteries, gaps may be generated between the connecting busbar and the plurality of electrode terminals in accordance with deviation in heights of the electrode terminals and errors in a shape of the connecting busbar. The gaps may cause defects in a welding joint.

In general, according to one embodiment, a busbar for an assembled battery electrically connects electrode terminals of a plurality of secondary batteries with each other, and includes a projecting portion that projects toward the electrode terminal.

An assembled battery of an exemplary embodiment includes a plurality of secondary batteries; and a connecting member that is electrically connected to an electrode terminal of each of the plurality of the secondary batteries. In this battery, at least one of the connecting member and the electrode terminal includes a projecting portion that projects toward the other, and the projecting portion contacts with the other.

The assembled battery of the exemplary embodiment will be described with referring to accompanying drawings.

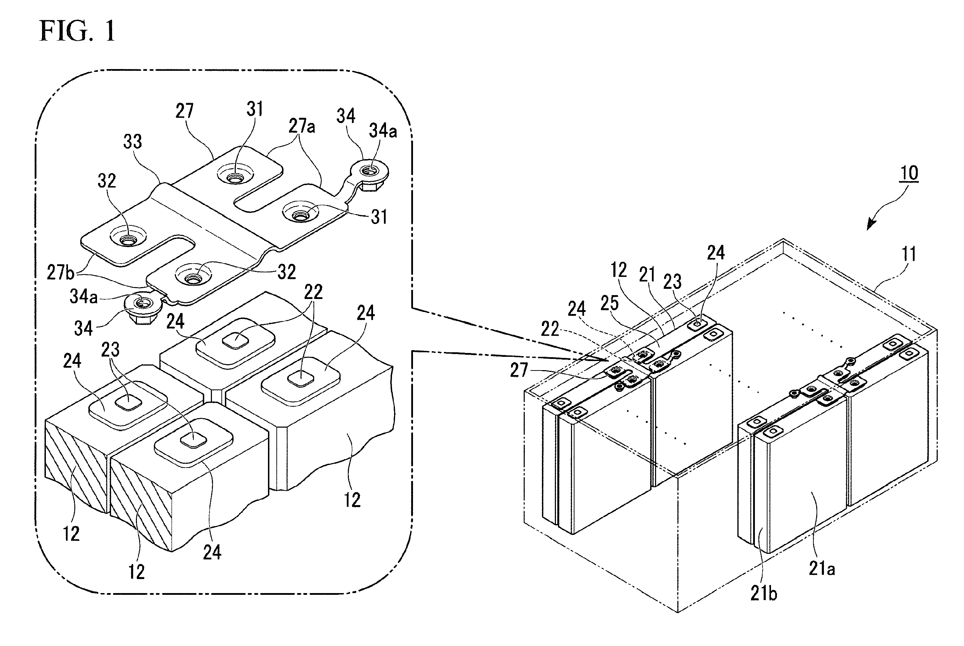

As illustrated in FIG. 1, the assembled battery 10 of the exemplary embodiment is provided with a housing 11 formed by a resin, and a plurality of secondary batteries 12 accommodated in the housing 11.

Each of the plurality of the secondary batteries 12 is, for example, a non-aqueous electrolyte secondary battery such as a lithium ion battery, which has an outer container 21 with a substantially rectangular parallelepiped shape that is flat and formed of aluminum or aluminum alloy, and electrode bodies (not illustrated) which are accommodated in the outer container 21 with non-aqueous electrolyte.

Each of the plurality of the secondary batteries 12 is provided with a positive electrode terminal 22 connected to a positive electrode of the electrode bodies and a negative electrode terminal 23 connected to a negative electrode of the electrode bodies. These terminals are located at both ends in a longitudinal direction on a terminal surface 25 (for example, upper end surface above a vertical direction) provided on a surface of the outer container 21, through a terminal insulator 24 formed of, for example, synthetic resin or glass.

In adjacent second batteries 12 of the plurality of secondary batteries 12, the adjacent positive electrode terminals 22 and the adjacent negative electrode terminals 23 are electrically connected with each other using a connecting busbar 27, which is formed of a conducting metal such as aluminum or brass.

The connecting busbar 27 may have various shapes according to connecting forms for the plurality of the secondary batteries 12. For example, the connecting busbar 27 illustrated in FIG. 1 has a shape of a substantially H-shaped plate which connects the positive electrode terminals 22 and the negative electrode terminals 23 of two pairs of the adjacent secondary batteries 12 in a longitudinal direction of the outer container 21.

The connecting busbar 27 is formed by bending-forming a conducting metal sheet made of aluminum or brass. The connecting busbar 27 includes a pair of first connecting portions 31 provided on a first end portion 27a, a pair of second connecting portions 32 provided on a second end portion 27b, and a coupling portion 33 which connects the first end portion 27a and the second end portion 27b. Moreover, the connecting busbar 27 includes a connecting piece 34 which has the screw hole 34a for being screwed and fixed to a control circuit board (not illustrated).

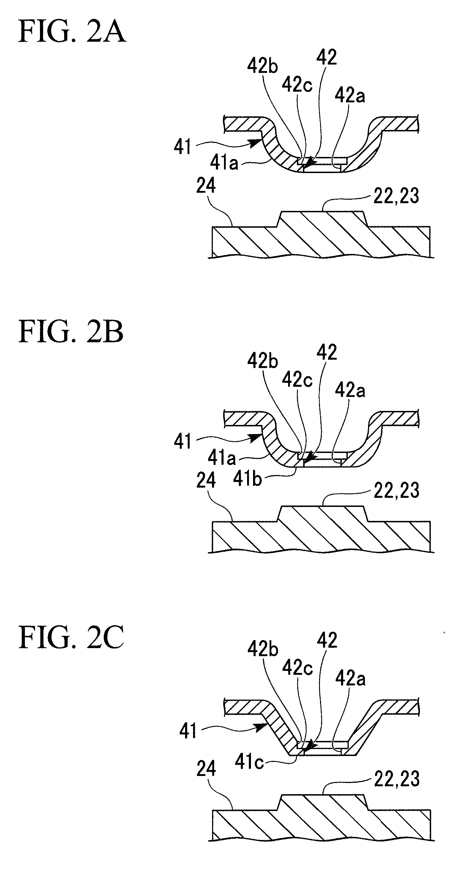

As illustrated in the first to third examples of FIGS. 2A to 2C, respectively, each of the first connecting portions 31 and the second connecting portions 32 includes the projecting portions 41 and the connecting opening portions 42 provided on tip ends of the projecting portions 41. The projecting portions 41 project toward each of the positive electrode terminals 22 and the negative electrode terminals 23, and are elastically and/or plastically deformed.

For example, the projecting portion 41 according to the first example illustrated in FIG. 2A includes the curved portion 41a which has a convex curved surface (for example, spherical surface) toward each of the positive electrode terminal 22 and the negative electrode terminal 23, and the connecting opening portion 42 is provided on the curved portion 41 a. The connecting opening portion 42 includes an inner wall portion 42b which forms the connecting opening 42a penetrating in a thickness direction in the curved portion 41a. The connecting opening portion 42 also includes the thinned portion 42c which is thinned in such a manner that a portion of an opposite side to the positive electrode terminal 22 and the negative electrode terminal 23 is cut off in the inner wall portions 42b.

The projecting portion 41 according to the first example is joined to the positive electrode terminal 22 and the negative electrode terminal 23 by performing welding such as laser welding on the thinned portion 42c in a state that a surface of the curved portion 41a contacts with the positive electrode terminal 22 and the negative electrode terminal 23 while the connecting opening 42a approaches the positive electrode terminal 22 and the negative electrode terminal 23.

For example, the projecting portion 41 according to the second example illustrated in FIG. 2B includes the curved portion 41a which has a convex curved surface (for example, spherical surface) toward each of the positive electrode terminal 22 and the negative electrode terminal 23, the planar portion 41b which has a planar surface, and the connecting opening portion 42 provided at the planar portion 41b. The connecting opening portion 42 includes the inner wall portion 42b which forms the connecting opening 42a penetrating in a thickness direction in the planar portion 41b. The connecting opening portion 42 also includes the thinned portion 42c which is thinned in such a manner that a portion of an opposite side to the positive electrode terminal 22 and the negative electrode terminal 23 is cut off in the inner wall portions 42b.

The projecting portion 41 according to the second example is joined to the positive electrode terminal 22 and the negative electrode terminal 23 by performing welding such as laser welding on the thinned portion 42c in a state that a surface of the planar portion 41b contacts with the positive electrode terminal 22 and the negative electrode terminal 23 while the connecting opening 42a approaches the positive electrode terminal 22 and the negative electrode terminal 23.

For example, the projecting portion 41 according to the third example illustrated in FIG. 2C includes the planar portion 41 c which has a plurality of planar surfaces convexly connected with each other toward the positive electrode terminal 22 and the negative electrode terminal 23, and the connecting opening portion 42 provided at the planar portion 41c. The connecting opening portion 42 includes the inner wall portion 42b which forms the connecting opening 42a penetrating in a thickness direction in the planar portion 41c. The connecting opening portion 42 also includes the thinned portion 42c which is thinned in such a manner that a portion of an opposite side to the positive electrode terminal 22 and the negative electrode terminal 23 is cut off in the inner wall portions 42b.

The projecting portion 41 according to the third example is joined to the positive electrode terminal 22 and the negative electrode terminal 23 by performing welding such as laser welding on the thinned portion 42c in a state that a surface of the planar portion 41c contacts with the positive electrode terminal 22 and the negative electrode terminal 23 while the connecting opening 42a approaches the positive electrode terminal 22 and the negative electrode terminal 23.

The coupling portion 33 is formed in such a manner that a cross-sectional surface swells in a convex shape for stress relaxation, such as a circular plate shape, U-plate shape or V-plate shape, in a direction separated from the secondary battery 12.

As stated above, according to the assembled battery 10 according to the exemplary embodiment, deviation in heights of the positive electrode terminal 22 and the negative electrode terminal 23 and errors in a shape of the connecting busbar 27 may be removed by elastically and/or plastically deforming the projecting portion 41 which contacts with the positive electrode terminal 22 and the negative electrode terminal 23. Thus, the connecting busbar 27 may inhibit to generate gaps between the connecting busbar 27, and the positive electrode terminal 22 and the negative electrode terminal 23. Therefore it is possible to prevent to produce defects in a welding joint between the connecting busbar 27, and the positive electrode terminal 22 and the negative electrode terminal 23.

An implementation illustrated in the first example (FIG. 2A), which includes no planar portion in the projecting portion 41, allows the projecting portion 41 to have larger deformable range, and is able to suppress to generate gaps more effectively, as compared with the implementations illustrated in the second and third examples (FIGS. 2B and 2C) in which the planar portion 41b or 41c contacts with the positive electrode terminal 22 or the negative electrode terminal 23.

Meanwhile, as in the second and third examples, the defects in the welding joint may be inhibited by contacting the planar portion 41b or 41c provided on the projecting portion 41 with the positive electrode terminal 22 or the negative electrode terminal 23.

### First Modification Example

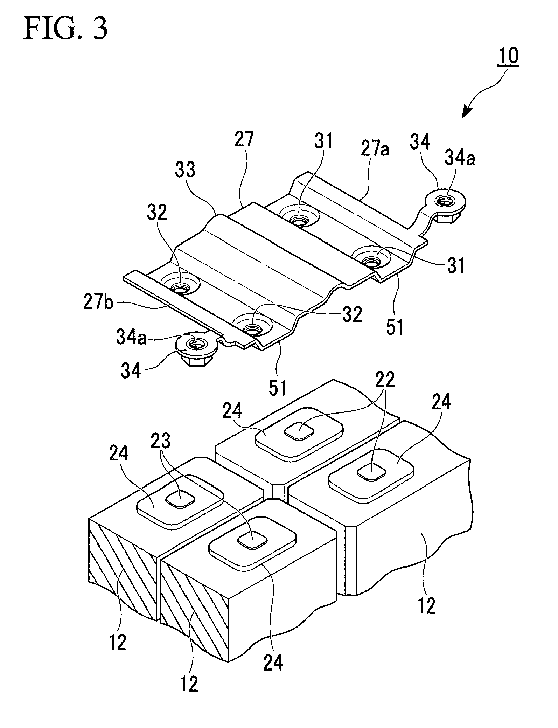

The implementation stated above include a pair of the first connecting portions 31 and a pair of the second connecting portions 32, each of which has a projecting portion 41. However, the implementation is not limited thereto but may include, for example, a pair of the first connecting portions 31 which share the projecting portion 51, and a pair of the second connecting portions 32 which share the projecting portion 51, as the first modification example illustrated in FIG. 3. The projecting portions 51 are formed by, for example, bending-forming a metal plate that configures the connecting busbar 27 so as to be projected toward the positive electrode terminal 22 and the negative electrode terminal 23.

### Second and Third Modification Examples

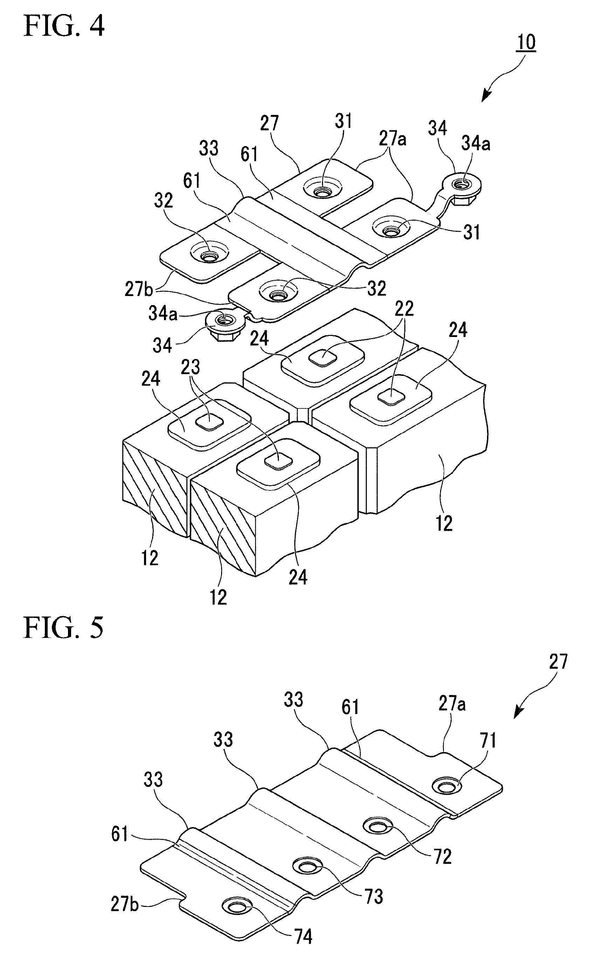

In the implementation stated above, the connecting busbar 27 may include the first end portion 27a and the second end portion 27b having a pair of the first connecting portions 31 and a pair of the second connecting portions 32, respectively, which are joined to the positive electrode terminal 22 and the negative electrode terminal 23, through the deforming portions 61 that are elastically and/or plastically deformed, as the second modification example illustrated in FIG. 4.

The connecting busbar 27 according to the second modification example is provided with the deforming portions 61, between the coupling portion 33 and the first end portion 27a, and between the coupling portion 33 and the second end portion 27b.

According to the second modification example, the deforming portions 61 are elastically and/or plastically deformed, thereby further suppressing to generate gaps between the connecting busbar 27, and the positive electrode terminal 22 and the negative electrode terminal 23.

The deforming portions 61 are positioned at locations provided on end portions of the connecting busbar 27, of portions contacting with the positive electrode terminal 22 and the negative electrode terminal 23 in the connecting busbar 27. For example, in the third modification example illustrated in FIG. 5, the connecting busbar 27 has more than three connecting portions (for example, first to fourth connecting portions 71 to 74) which are serially coupled through the coupling portion 33. This connecting busbar 27 is provided with the deforming portions 61 which are displaced between the coupling portion 33 and the first end portion 27a having the first connecting portion 71, and between the coupling portion 33 and the second end portion 27b having the fourth connecting portion 74.

In the second and third modification examples, the connecting busbar 27 including the deforming portions 61 may have the connecting opening portion 42 instead of the projecting portion 41, in the first connecting portions 31, the second connecting portions 32, and the first to fourth connecting portions 71 to 74.

### Fourth Modification Example

The implementation stated above includes the projecting portion 41 in the connecting busbar 27. However, the implementation is not limited thereto and may include the projecting portions 81 in the positive electrode terminal 22 and the negative electrode terminal 23 of the secondary battery 12.

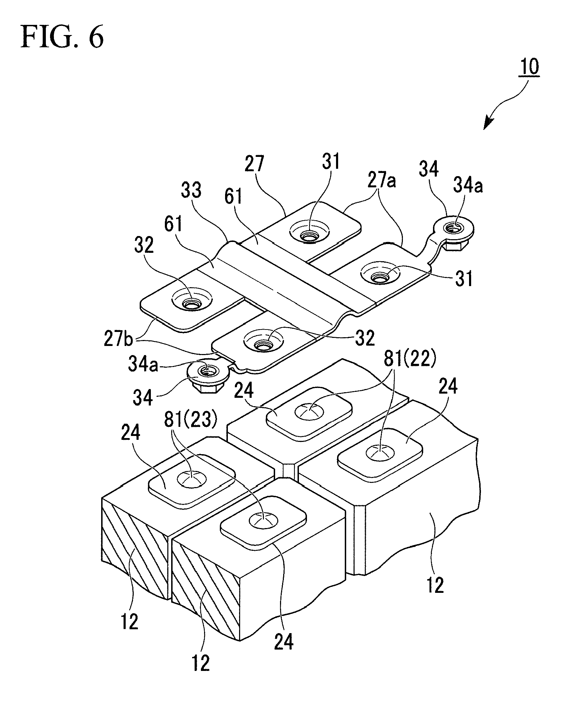

For example, in the fourth modification example illustrated in FIG. 6, each of the positive electrode terminal 22 and the negative electrode terminal 23 is provided with the projecting portions 81 that project toward the connecting busbar 27. The projecting portions 81 have, for example, convex curved surfaces (for example, spherical surfaces) toward the connecting busbar 27.

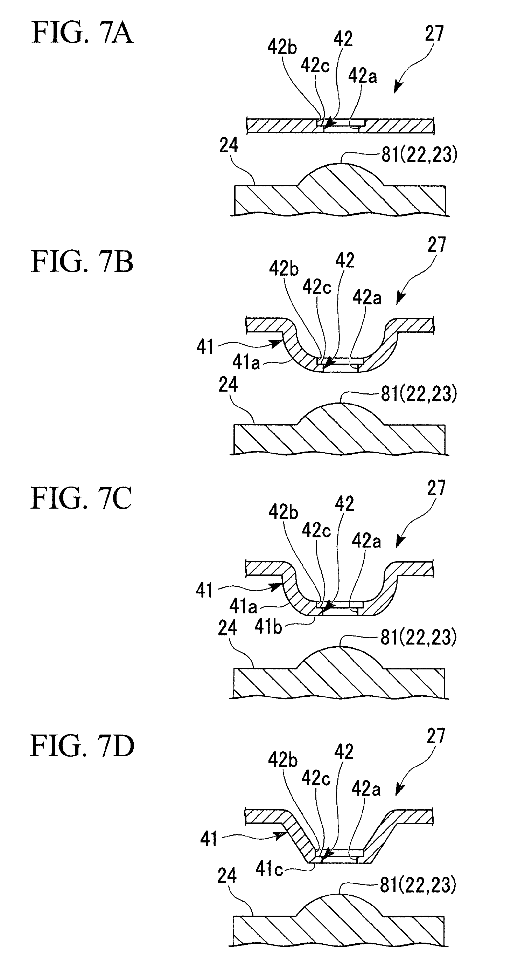

In the fourth modification example, the connecting busbar 27 is preferably provided with at least the connecting opening portion 42 connected to each of the positive electrode terminal 22 and the negative electrode terminal 23 as illustrated in FIGS. 7A to 7D.

For example, the connecting busbar 27 illustrated in FIG. 6 has a shape of a substantially H-shaped plate, and includes a pair of the first connecting portions 31 provided on the first end portions 27a, a pair of the second connecting portions 32 provided on the second end portions 27b, and the coupling portion 33 that couples the first end portions 27a and the second end portions 27b. The connecting busbar 27 further includes the deforming portions 61. The deforming portions 61 are displaced between the connecting piece 34 having the screw hole 34a, and the coupling portion 33 and the first end portions 27a; and between the coupling portion 33 and the second end portions 27b.

Moreover, in the connecting busbar 27 illustrated in FIG. 6, each of the first connecting portions 31 and the second connecting portions 32 is provided with, for example, the connecting opening portions 42 as illustrated in any one of FIGS. 7A to 7D.

For example, the connecting busbar 27 illustrated in FIG. 7A includes the connecting opening portion 42 provided on each of the first end portions 27a and the second end portions 27b, which have flat plate shape. The connecting busbar 27 is joined to the positive electrode terminal 22 and the negative electrode terminal 23 by performing welding such as laser welding on the thinned portion 42c in a state that the flat surfaces of each of the first end portions 27a and the second end portions 27b contact with the surfaces of the projecting portions 81 while the connecting opening 42a approaches to the projecting portions 81 of each of the positive electrode terminal 22 and the negative electrode terminal 23.

For example, the connecting busbar 27 illustrated in FIG. 7B includes the projecting portion 41 illustrated in the first example stated above and the connecting opening portion 42 in each of the first connecting portions 31 and the second connecting portions 32. The connecting busbar 27 is joined to the positive electrode terminal 22 and the negative electrode terminal 23 by performing welding such as laser welding on the thinned portion 42c in a state that the surface of the curved portion 41 a contacts with the surface of the projecting portion 81 while the connecting opening 42a approaches to the projecting portions 81 of each of the positive electrode terminal 22 and the negative electrode terminal 23.

For example, the connecting busbar 27 illustrated in FIG. 7C includes the projecting portion 41 illustrated in the second example stated above and the connecting opening portion 42 in each of the first connecting portions 31 and the second connecting portions 32. The connecting busbar 27 is joined to the positive electrode terminal 22 and the negative electrode terminal 23 by performing welding such as laser welding on the thinned portion 42c in a state that the surface of the planar portion 41b contacts with the surface of the projecting portion 81 while the connecting opening 42a approaches the projecting portions 81 of each of the positive electrode terminal 22 and the negative electrode terminal 23.

For example, the connecting busbar 27 illustrated in FIG. 7D includes the projecting portion 41 illustrated in the third example stated above and the connecting opening portion 42 in each of the first connecting portions 31 and the second connecting portions 32. The connecting busbar 27 is joined to the positive electrode terminal 22 and the negative electrode terminal 23 by performing welding such as laser welding on the thinned portion 42c in a state that the surface of the planar portion 41c contacts with the surface of the projecting portion 81 while the connecting opening 42a approaches the projecting portions 81 of each of the positive electrode terminal 22 and the negative electrode terminal 23.

According to the fourth modification example, it is able to further inhibit to generate gaps between the connecting busbar 27, and the positive electrode terminal 22 and the negative electrode terminal 23.

Moreover, in the fourth modification example, the projecting portion 81 is not limited to the convex curved surface (for example, spherical surface) but may include the convex curved surface and the planar surface, or include a plurality of the planar surfaces convexly connected with each other instead of the curved surface.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A busbar for an assembled battery that electrically connects electrode terminals of a plurality of secondary batteries with each other, the busbar comprising:
a projecting portion that projects toward the electrode terminal.

2. The busbar according to claim 1, wherein
the projecting portion includes a curved portion having a convex curved surface.

3. The busbar according to claim 1 or 2, wherein
the surface of the projecting portion includes a planar portion having a planar surface.

4. The busbar according to claim 1, wherein
the surface of the projecting portion includes a planar portion having a plurality of planar surfaces convexly connected with each other.

5. The busbar according to any one of claims 1 to 4, further comprising:
a deforming portion that elastically and/or plastically deforms an end portion having a contact portion that contacts with the electrode terminal.

6. An assembled battery comprising:
a plurality of secondary batteries; and
a connecting member that is electrically connected to an electrode terminal of each of the plurality of the secondary batteries, wherein
at least one of the connecting member and the electrode terminal includes a projecting portion that projects toward the other, and
the projecting portion contacts with the other.

7. The assembled battery according to claim 6, wherein
the projecting portion includes a curved portion having a convex curved surface.

8. The assembled battery according to claim 6 or 7, wherein
a surface of the projecting portion includes a planar portions having a planar surface, and
the planar portion contacts with the other.

9. The assembled battery according to claim 6, wherein
a surface of the projecting portion includes a planar portion having a plurality of planar surfaces convexly connected with each other, and
the planar portion contacts with the other.

10. The assembled battery according to any one of claims 6 to 9, wherein
the connecting member further includes a deforming portion that elastically and/or plastically deforms an end portion having a contact portion that contacts with the electrode terminal.
